# EUROPEAN PATENT APPLICATION

(11) **EP 3 885 291 A1**
(43) Date of publication of application: **29.09.2021**
(21) Application number: 20164946.4
(22) Date of filing: 23.03.2020
(51) Int. Cl.: B65G 57/10, B65G 57/24

(54) **PALLETIZING APPARATUS**

(71) Applicant: Avanti Conveyors, Funess Vale, Derbyshire SK23 7SW (GB)
(72) Inventor: Vanhoutte, Jan, 8810 Lichtervelde (BE); Mander, Simon, Derbyshire, derbyshire SK23 7SW (GB)
(74) Representative: BiiP cvba

(57) **Abstract**

The present invention discloses A multi-layer palletizing apparatus, for stacking layers received at a receiving station on to a stack at a palletization station, the apparatus comprising: a primary stacking means comprising two or more vertically spaced apart primary elevating conveying belts, each adapted to receive one of a plurality of layers thereon and extended towards the palletization station; the primary conveying belts comprising a first vertical elevating means adapted to vertically move the belts in an upward and / or downward direction; a secondary stacking means comprising a plurality of grippers set adapted to move vertically and / or horizontally via a drive unit allowing each gripper set to movingly grip layers from one of the two or more spaced apart primary elevating conveying belts; wherein, when the layers to be stacked are received on the conveying belts of the primary stacking means, the first vertical elevating means elevates to a height corresponding to a loading height at the palletization station such that each of the gripper sets move vertically and / or horizontally to at least partially hold and move the layer from one of the primary stacking belts towards the palletizing station to place it onto the stack.

## Description

### Field of Invention

The present invention relates generally to a palletizing apparatus. More particularly, the present invention relates to a palletizing apparatus having an improved stacking efficiency.

### Background of the Invention

Over the last few decades, there has been considerable efforts for improvising the shipment of products in various industries. Further, in the large scale production of wrapped or unwrapped products, such as food items, tiles, compact disks (CDS) or other relatively flat products or packages, it is often desirable to arrange groups of individual items for the purpose of shipment, or the like. Such rearrangement is +-generally done by placing items, in the form of stacks such as for example, in layers on a pallet.

Recently, the pallets have extensively been utilized in processing plants for handling various types of products, bundled together or disposed in cases, from one place to another. Further, there has been a rise in use of pallet for transportation of objects from one location to another, for example, in the transportation of goods from a manufacturer to a distributor.

Conventionally, the palletization was performed using articulated robots that used to grab a layer to be stacked and then dropping it onto the pallets. One such articulated robot include a manipulator and an arm. In operation, as the manipulator lifts the layer, the arm stretches and bends itself so as to locate the manipulator in a stacking position, whereupon the layer is released by the manipulator. This process is repeated to stack a plurality of loads. Such robots, while being slow, were not able to align the stacks properly and therefore are not preferred for stacking of the pallets.

Other similar mechanisms included frames having one or movable portions on which is disposed a head having a number of grippers attached to the head. The grippers operate to grab each package and lift and rotate the package into the desired position. Once in that position, the head is moved over the pallet and subsequently lowered the package to a desired position on the pallet.

Yet other mechanisms currently utilized include use of long fingers for gripping the layers to be loaded which then slides on machines, such as for example, a conveyor belt, towards the loading stations where elevator means are utilized for loading the layers on to the pallet. Further in some other examples, the gripper included two sets of fingers, each covering only half the length of the layer. The gripper also include two or more opposing centering plates for aligning the layer during the movement. These grippers are then mounted on wagon which moved towards the loading station where they are demounted gently thereby, maintaining the alignment of the layers while loading onto the pallet.

Such mechanism while being better than previous mechanism had several shortcomings. One such shortcoming included the process being slow as the wagon, or the like, after loading off the layer, moves back empty which slows down the process. Further, there was the issue of misalignment of the load when stacked onto the pallets.

In some examples, to overcome the problem of misalignment of the pallets, the clamping plates were utilized. These plates somewhat improved the alignment but were still not preferred because of the fact that the centering plates only centered the actual layer and some part of the layer underneath it. However, the bottom layers were not checked for alignment thereby, causing the formation of voids, gaps, or the like, and therefore and not aligning the pallets on the outside bottom.

Accordingly, the currently available palletizing solutions faces considerably significant problem of not aligning the layers properly on to the pallet which in turn, may cause damaged during subsequent transport, for example by adjacent pallets. Further, such a misalignment may prevent the pallet from being loaded onto various dispensing apparatus. When this occurs, the stack of pallets must be manually restacked so that the skewing of adjacent pallets is not so severe and so the restacked pallets may be loaded into the pallet dispensing apparatus.

In addition to the above problem, there is a serious problem of maintaining the stacking function at a consistent with that of the machine which produces the layers to be stacked. Additionally, while the above mentioned mechanisms are capable of moving packages into desired positions to form pallets of the items for shipment, the mechanisms require many separate structural items separate from the actual items or package conveyance line, which greatly increases the complexity and cost of the devices.

Therefore, there exists a need in art for an improved palletizing apparatus which while providing a more efficient and quicker operation and at a lower cost is able to maintain the alignment of the layers loaded onto the pallet in a convenient way.

### Summary of the Invention

In one aspect of the present disclosure, a palletizing apparatus for stacking layers received from a receiving station onto a stack at a palletization station is disclosed. The palletizing apparatus includes a primary stacking means. The primary stacking means includes two or more vertically spaced apart primary elevating conveying belts, extended towards the palletization station; each adapted to receive one of a plurality of layers thereon. The primary conveying belts include a first vertical elevating means adapted to vertically move the spaced apart conveying belts in an upward and / or a downward direction.

The apparatus further includes a secondary stacking means extending away from the palletizing station in a direction opposite to the primary stacking means. The secondary stacking means includes a plurality of gripper sets. The secondary stacking means further includes a drive unit adapted to enable a movement of each of the gripper sets in a vertical and / or horizontal direction so as to allow each of the gripper sets to movingly grip the one or more layers positioned onto each of the primary elevating conveying belts and drop it at the palletization station.

In operation, when the layers to be stacked are received onto the conveying belts of the primary stacking means, the first vertical elevating means and the second the second elevates to a height corresponding to a loading height at the palletization station such that each of the gripper sets at least partially hold and move the layers from each of the primary stacking belts towards the palletizing station to place it onto the stack.

The palletizing apparatus further includes a vertically movable centering frame positioned above the palletizing station. The centering frame includes one or more set of centering plates wherein each set of the centering plate includes two centering plates positioned on opposite sides of the frame and extending downwardly towards the stack positioned at the palletizing station and adapted to align the layers positioned onto the stack thereat.

Generally, the palletizing apparatus includes a plurality of individual conveyors arranged and sequentially connected between the receiving station and the primary stacking means.

Preferably, the plurality of individual conveyors includes a layer loading unit extending away from the palletizing station in a direction opposite to the secondary stacking means.

Potentially, the layer loading unit includes an auxiliary stacking means configured thereon.

Further potentially, the auxiliary stacking means includes an inclinable transferring plate adapted to be inclined using a second vertical elevating unit, so as to be pivotally and selectively connected to one of the two or more vertically spaced apart conveying belts such that a separate layer(s) received from the receiving station is transferred to one of the primary conveying belts.

Yet further potentially, the layer loading unit includes an aligning unit having a pair of two substantially mirror symmetrical aligning members adapted to align the layers in accordance to a desired orientation at which the layers are to be stacked and / or palletized.

Particularly, the plurality of individual conveyors further includes a first buffering conveyor having a bundle pre-stacker adapted to receive and buffer infeed layers in a stack of layers, and positioned at the receiving station.

Further particularly, the bundle pre-stacker includes a pair of sideways centering stackers adapted to center the infeed layers from sides such that the stacked layers are aligned thereat.

Additionally, the plurality of individual conveyors include a first side transfer adapted to receive the infeed layers / stack of layers from the buffering conveyor and divert along a direction of conveyors towards the palletizing station.

Further, the plurality of individual conveyors include a second side transfer connected to the first side transfer through a second buffering conveyor which in turn is connected to the layer loading unit through a third buffering means along the direction of conveyors towards the palletizing station.

Furthermore, the apparatus includes a turntable unit configured onto one of the second buffering conveyor and / or the third buffer conveyors, adapted to change an orientation of one or more layers received thereon in accordance to the desired orientation at which the layers are to be palletized.

Potentially, the plurality of gripper sets include a number of gripper sets equal to a number of spaced apart primary elevating conveying belts such that each of the gripper sets is adapted to movingly grip the layer from one of the primary elevating conveying belts, simultaneously and at the same time.

Further potentially, each of the gripper sets includes a pair of vertically spaced apart fingers adapted to hold together the individual layer and / or stack of layers there between.

Particularly, the first elevating unit, the second elevating unit and the driving unit is selected from one of but not limited to an electric motor, hydraulic driving assemblies, or the like.

Further particularly, each of the plurality of individual conveyors is an automatic conveyor having a receiving portion separated from a discharge portion through a narrow conveying belt.

Optionally, the palletizing apparatus includes a control unit for remotely controlling the operations / stacking / alignment of the layers to be stacked.

Further optionally, the control unit includes a data capturing unit for tracking the location of a feed; a processor unit for processing the data received and an instructor unit for delivering handling/operation instructions to the palletizing apparatus.

In another aspect of the present disclosure, a method for stacking layers onto a stack using a palletization apparatus having a primary stacking means, a secondary stacking means and a vertical centering frame, is disclosed. The method includes receiving at least one layer to be stacked on to each of the spaced apart primary elevating conveying belts of the primary stacking means. The method further includes adjusting a height of the first vertical elevating means to a stackable height of the palletizing station. Further, the method includes adjusting the height of the drive unit such that the height of each of the gripper sets corresponds to a height corresponding to one of the elevating conveying belts. The method furthermore includes moving each of the gripper sets to move the corresponding layers and place the layer onto the top of the stack at the palletizing station simultaneously and at a same time. The method additionally includes moving the centering frame vertically down onto the stack such that the layer placed on the stack is centrally aligned by the opposite centering plates thereof.

Further potentially, the includes an inclinable adapted to be inclined using a second vertical elevating unit, so as to be pivotally and selectively connected to one of the two or more vertically spaced apart conveying belts such that a separate layer(s) received from the receiving station is transferred to one of the primary conveying belts.

Optionally, the method further includes a step of pivotally elevating the transferring plate of the auxiliary stacking so as to be pivotally and selectively connected to one of the two or more vertically spaced apart conveying belts such that a separate layer(s) received from the receiving station is transferred to one of the primary conveying belts.

In yet another aspect of the present disclosure, a method for processing the layers using the palletization apparatus to form one or more layers of a desired pattern such that more layers may be processed simultaneously, is disclosed.

Potentially, the step of processing the layers include accumulating on one or more buffer conveyors and / or turning on the turning unit before loading onto the primary stacking means.

Yet further potentially, the step of processing includes aligning the layers in accordance to the desired orientation at which the layers are to be stacked and / or palletized.

The details of one or more implementations are set forth in the accompanying drawings and the description below. Other aspects, features and advantages of the subject matter disclosed herein will be apparent from the description, the drawings, and the claims.

### Brief Description of drawings

FIG. 1a is a block diagram illustrating a palletizing apparatus, in accordance with one preferred embodiment of the present disclosure;
FIG. 1b is a block diagram illustrating a palletizing apparatus, in accordance with another embodiment of the present disclosure;
FIG. 2 illustrates a schematic view of the palletizing apparatus, in accordance with one preferred embodiment of the present disclosure;
FIG. 3 illustrates a schematic view of the plurality of palletizing apparatus, in accordance with another embodiment of the present disclosure;
FIG. 4 illustrates another schematic view illustrating centering frame of the palletizing apparatus, in accordance with the embodiment of the present disclosure;
FIG. 5a illustrates a block diagram illustrating a plurality of individual conveyors in accordance with an embodiment of the present disclosure;
FIG. 5b illustrates a block diagram illustrating a plurality of individual conveyors in accordance with another embodiment of the present disclosure;
FIG. 6 depicts a flowchart illustrating the steps for processing the layers using the palletizing apparatus, in accordance with an embodiment of the present disclosure; and
FIG. 7 depicts a flowchart illustrating the steps for stacking the layers using the palletizing apparatus, in accordance with an embodiment of the present disclosure.

### Detailed Description of the Preferred Embodiments

The present application discloses a palletizing apparatus for stacking plurality of layers on to a stack at the palletizing station. The layers to be stacked may be an ready for shipment packages / items / object such as RCB boxes, trays, piles bundles, or the like of goods / materials, such as a dairy products, breweries, or any other kind of end user product. The palletizing apparatus while being fast and efficient, limits the possibility of a misalignment between the stacked / palletized layers, and allows multiple layers to be stacked simultaneously and at a same time. Such an alignment of the stacked layers avoids any damage to stacked object during transportation / dispensing / shipment etc. Further, the palletizing apparatus being simple and easy to operate enables the possibility of using the apparatus in existing production plants / converters, or the like. In a preferred embodiment, the apparatus includes a primary stacking means for stacking the layers onto a base pallet and a vertical centering frame for aligning the layers on pallet each time a new layer is added thereon. Such an alignment from a top direction after addition of each layer onto the pallet maintains the alignment starting from the bottom of the pallet and therefore, avoids formation of gaps, voids, etc at the bottom of the pallet due to misalignment. It is to be understood that unless otherwise indicated this invention need not be limited to applications in corrugated boxes / packages. As one of ordinary skill in the art would appreciate, variations of the invention may be applied to other applications such as in industries automobiles, dairy, health industry, brewing industry or the like and wherever the stacking of products, generally flat, is required. Moreover, it should be understood that embodiments of the present invention may be applied in combination with existing conveyors / elevators / various stacking tools, and / or machines, to achieve any desired application. It must also be noted that, as used in this specification and the appended claims, the singular forms "a," "an" and "the" include plural referents unless the context clearly dictates otherwise. Thus, for example, the term "a layer" is intended to mean a single layer or a pile of layers, "a connecting mechanism" is intended to mean one or more connecting mechanisms, or a combination thereof.

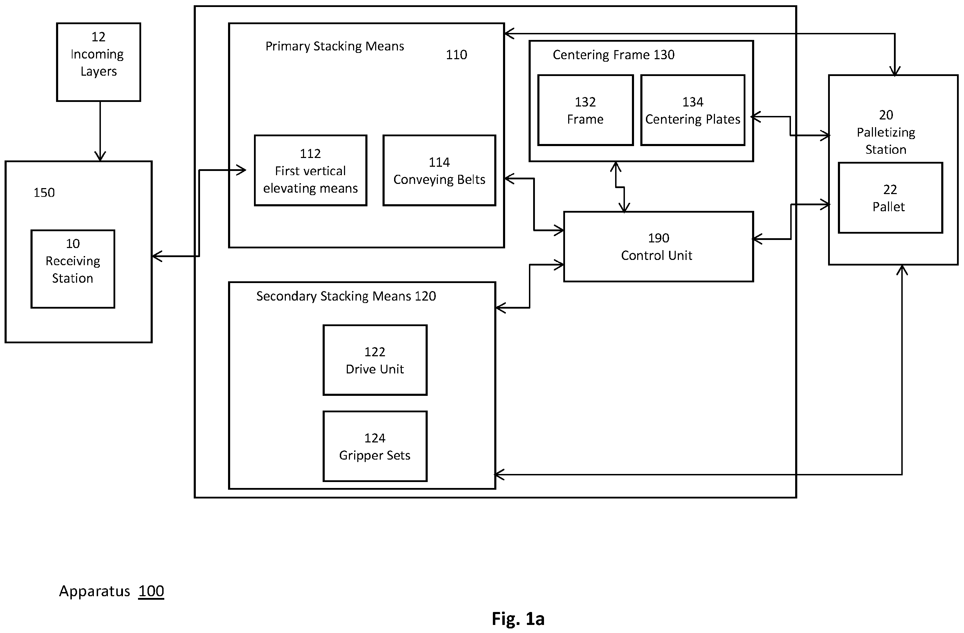

In description of the FIGS. 1a-1b that follow, elements common to the schematic system will have the same number designation unless otherwise noted. In a first embodiment, as illustrated in FIG. 1a, the present disclosure provides a palletizing apparatus **100** for stacking infeed layers **12** received at a receiving station **10,** onto a pallet **22** at the palletizing station **20.** The apparatus **100** includes a primary stacking means **110,** a secondary stacking means **120,** and a vertical centering frame **130** for aligning the layers **12** when stacked onto the pallet **22.** The primary stacking means **110** includes a first vertical elevating means **112,** and two or more vertically spaced apart primary elevating conveying belts **114,** extending towards the palletizing station **20.** Each of the spaced apart conveying belts **114** is adapted to receive one of the incoming layers **12** thereupon.

The secondary stacking means **120** includes a drive unit **122,** and plurality of gripper sets **124** adapted to movingly grip the one or more layers **12** positioned onto each of the primary elevating conveying belts **114** and drop it onto the pallet **22.**

The vertically movable centering frame **130** includes a frame **132** having four sides, positioned above the pallet **22** of the palletizing station **20.** The frame **132** includes one or more set of centering plates **134** downwardly extended from the frame **132** towards the pallet **22.** The palletizing apparatus **100** further includes a plurality of individual conveyors **150** arranged and sequentially connected between the receiving station **10** and the primary stacking means **110,** directing the flow of the layers 12 received at the receiving station **10** towards the palletizing station **20.**

In Operation, when the layers **12** to be stacked are received onto the conveying belts **114** of the primary stacking means **110,** the first vertical elevating means **112** and the drive unit **122** elevates to a height corresponding to a loading height of the pallet **22** such that each of the gripper sets **124** at least partially hold and move the layers **12** from each of the primary stacking belts **114** towards the palletizing station **20** to place it onto the pallet **22.** Further, the vertically movable centering frame **130** is moved in a downward direction such the centering plates **134** align the stack of layers **12** positioned onto the pallet **22.**

The apparatus **100** further includes a control unit **190** for controlling the operation / handling / of various components such as, the vertical elevating means **112,** the drive unit **122** and / or the conveying belts **114** and / or the gripper sets **124** and / or the centering plates **134** of the vertical frame **130** of the apparatus **100.**

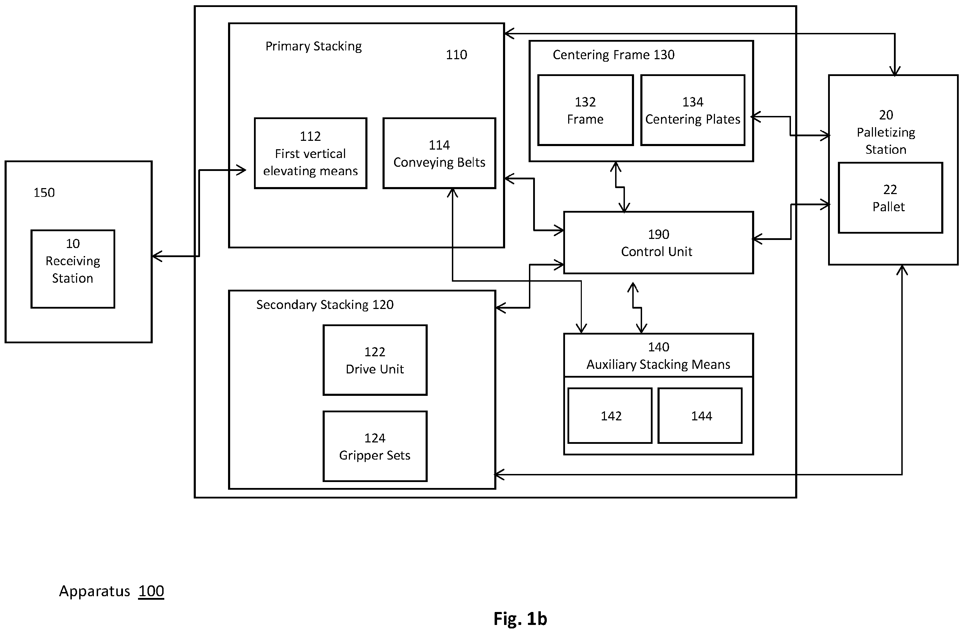

In a modification of the first embodiment, as illustrated in FIG. 1b, the apparatus includes an auxiliary stacking means **140.** The auxiliary stacking means **140** includes a second vertical elevating means **142,** and an inclinable transferring plate **144** adapted to be pivotally and selectively connected to one of the two or more vertically spaced apart conveying belts **114** such that a separate layer(s) **12** received from the receiving station **10** is transferred to one of the primary conveying belts **114.**

The auxiliary stacking mean **140** simplifies the apparatus **100** in that it provides an additional transferring means to move the a different layer **12** onto each of the vertically spaced apart conveying belts **114,** without requiring a downward movement thereof to receive the layers **12** thereupon one by one. As may be understood that in the absence of the auxiliary stacking means **140** as disclosed within the first embodiment illustrated in Fig. 1a, the first vertical elevating means **112** is required to move down to individually collect the layers **12** onto each of the conveying belts **114** separately, therefore requiring multiple downward movements to receive the layers **12** onto the two or more primary conveying belts **114.**

FIGS. 1a and 1b schematically show the arrangement of the basic components of the apparatus of the present disclosure. However, in the construction of commercial functional units secondary components such as driving means, coupling means, harnesses, support structure and other functional components known to one of skill in the palletizing technology may be incorporated in the apparatus. Such commercial arrangements are included in the present invention as long as the structural components and arrangements disclosed herein are present. Accordingly, it is to be contemplated that the present palletizing apparatus may be configured to be operated in any working environment and may be incorporated in different ways such as in some embodiment the apparatus may be supported from the top using support arms, or the like. While in other embodiments, the apparatus may be incorporated on ground and supported from sides, or any other direction as deems possible without deviating from the scope of the current invention.

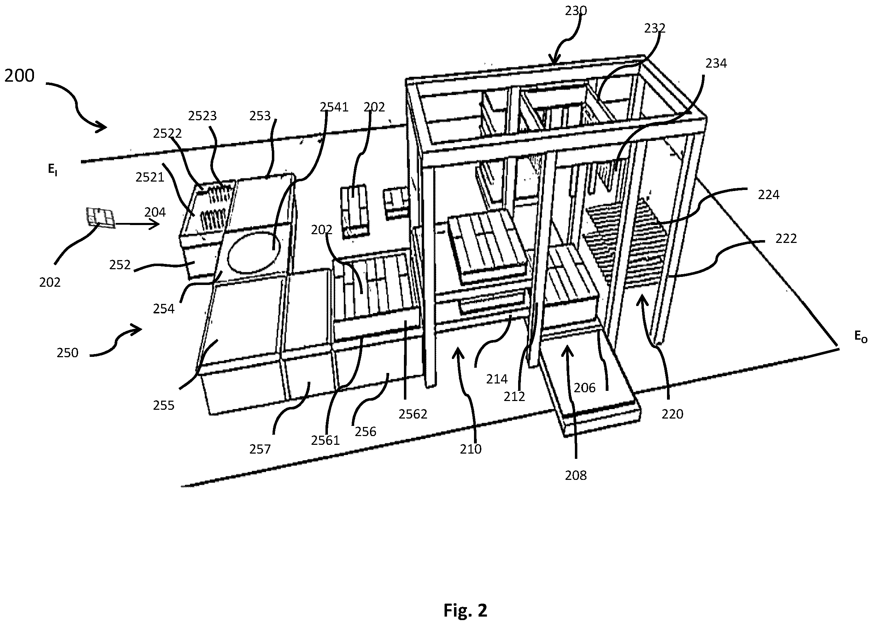

Fig. 2-4 illustrates a palletizing apparatus **200** having a receiving station **204** for receiving an input feed i.e. plurality of layers **202,** extended towards a palletizing station **208.** The apparatus **200** includes primary stacking means **210,** a secondary stacking means **220,** and a vertical centering frame **230,** adapted to stack one or more layers **202** simultaneously onto a pallet **206** at the palletizing station **208.**

The receiving station **204** is an infeed portion positioned at an input end **Eₗ** of the apparatus **200,** and is generally connected to a layer formation unit (not shown) of one or more corrugated systems (not shown). The layer formation unit may be any conventionally known layer formation unit configured to receive the separated bundles at its infeed and arranging together as per the requirements to out-feed the plurality of layers **202** towards the receiving station **204** in accordance with a desired orientation and / or a stacking pattern.

The palletizing apparatus **200** further includes a plurality of individual conveyors **250,** arranged and sequentially connected between the receiving station **204** and the primary stacking means **210** extended towards the palletizing station **208,** which in turn is extended towards the secondary stacking means **220** in a direction opposite to the primary stacking means **210** towards an output end **E**ₒ of the apparatus **200.**

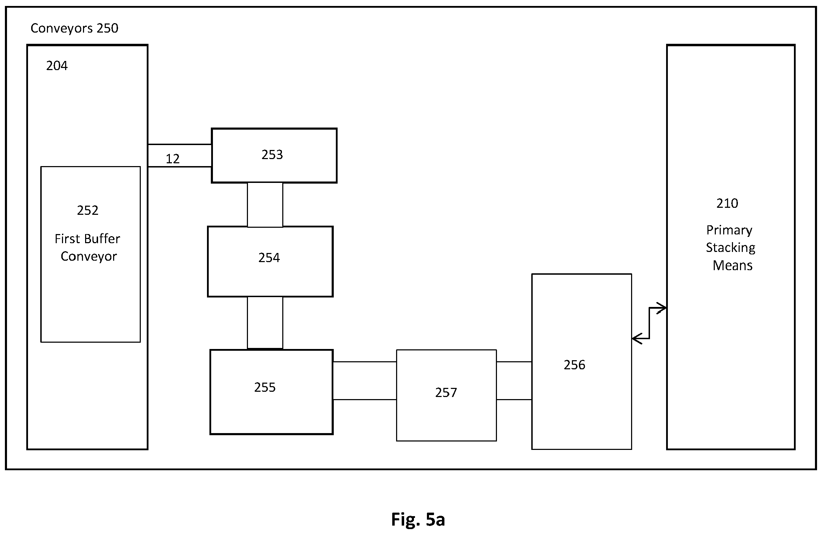

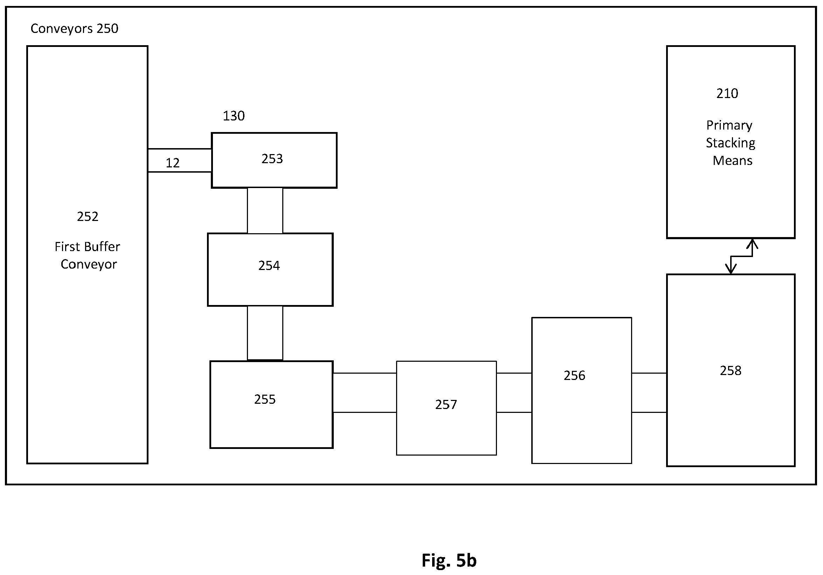

As illustrated in Fig. 5a & 5b, the plurality of individual conveyors **250** are adapted to process the layers **202** into a predetermined orientation and / or a stacking pattern, as they move downstream from the receiving station **204** towards the primary stacking means **210,** in accordance with different embodiments of the current disclosure.

The plurality of individual conveyors **250** includes a first buffering conveyor **252** positioned at the receiving station **204,** having a buffering space **2521** adapted to receive and buffer the plurality infeed layers **202.** The first buffering conveyor **252** further includes bundle pre-stacker **2522** having a pair of sideways centering stackers **2523** for stacking the infeed layers **202** while aligning them from sides. Optionally, the bundle pre-stacker **2522** is further provided with a counter ejector (not shown) adapted to eject a predetermined number of layers downstream to the buffer conveyor **252.** In an embodiment, the counter ejector is configured to forward the lower most layer of the stacked layers **202** downstream to the buffer conveyor **252.** Alternatively, the counter ejector is configured to forward a stack of a predetermined number of layers **202** downstream to the buffer conveyor **252.**

The plurality of individual conveyors **250** further include a first side transfer conveyor **253** adapted to receive the layers / stack of layers **202** from the buffering conveyor **252** and divert along a direction of conveyors towards a second side transfer conveyor **255** connected to the first side transfer conveyor **253** through a second buffering conveyor **254.** The use of the first side transfer conveyor **253** allows to change the direction of the layers / stack of layers **202** perpendicularly towards the second buffer conveyor **254** positioned perpendicularly to the first buffer conveyor **252.**

The second buffer conveyor **254** includes a turning unit **2541** adapted to turn and / or orient the layers / stack of layers **202** in accordance to the desired orientation and / or the stacking pattern. Such a stacking and / or orientation is performed by first accumulating the layers / stack of layers **202,** out-feed from the pre-stacker **2521** of the first buffer conveyor **252** and then rotating the turning unit **2541** horizontally, if desired, at a desired angle, generally in the multiples of 90° and preferably in multiples of 45° degree. For Instance, examples of different angles may include, but are not limited to 90°, 180°, 270°, 360°, and so on.

Accordingly, the second buffer **254** may be configured to accumulate the rows received thereon. Such an accumulation by the second buffer **254** is generally required to improve the capacity of the apparatus by first accumulating a significant number of layers **202** before they are proceeded forward towards the palletizing station **208.** In some other embodiments, the second buffer conveyor **254** may further be configured to temporarily lift the infeed layers **202** using a lifting device such as forks, fingers etc. In such instance, when additional layers **202** are received thereat, the lifting device is lowered and the accumulated layers **202** are put on the additional layers **202** to enable a layer formation process at the second buffer conveyor **254.**

The second buffer conveyor **254** is generally in line with the second side transfer **255,** connected to, and substantially perpendicular to a layer loading conveyor **256** adapted to transfer the layers / stack of layers **202** towards the primary stacking means **210.**

Accordingly, the second side transfer **255** is adapted to receive oriented / stacked layers **202** at its infeed, and is connected to the layer loading conveyor **256** at its outfeed.

The significance of using such side transfers **253, 255** is that smaller spaces may be utilized more efficiently for the process of palletization without requiring to interrupt the process for diverting direction of flow of layers / stack of layers **202.** In a preferred embodiment, the side transfers **253, 255** must be of a length equal to a width of the downstream conveyors i.e **254, 256,** thereby avoiding a possibility of falling off the layers **202** downstream thereto.

The layer loading conveyor **256** includes a layer loading unit **2561** adapted to transfer the layers / stack of layers **202** towards the primary stacking means **210.** The layer loading unit **2561** may include any conventionally known transferring mechanism configured to receive the patterned / oriented layers **202** at its infeed and transferring it towards the primary stacking means **210.** In some embodiments, the transferring mechanism may include various kind of known automatic solution such as robots, elevators, grippers, and the like suitable to deliver the patterned / stacked layers **202** onto the primary stacking means **210.**

In some embodiments of the present invention, the layer loading conveyor **256** may further include an aligning unit **2562** for aligning layers / stack of layers **202** to be transferred to the primary stacking means **210.** In some preferred instances, the aligning unit **2562** includes two substantially mirror symmetrical aligning members which are disposed at opposite sides of layer loading conveyor **256,** and means for jointly moving the aligning members toward and / or away from each other, preferably through identical distances, so as to align the layers **202** from sides in accordance to the desired orientation at which the layers **202** are to be stacked and / or palletized.

Optionally, in some embodiments, the plurality of conveyors **250** further include a third buffering means **257** extending between the second side transfer **255** and the layer loading conveyor **256** along the direction of conveyors **250** towards the palletizing station **208.** The third buffer conveyor **257** is generally adapted to delay the movement of layers / stack of layers **202** towards the layer loading conveyor **256.** Such a delay is required in some instances to keep the pace of the apparatus **200** as deemed required during the operation thereof.

As illustrated in Fig. 2 through Fig. 4, the primary stacking means **210,** adapted to receive the layers / stack of layers **202** from the layer loading unit **256,** includes two or more vertically spaced apart primary elevating conveying belts **214,** including a first primary elevating conveying belt **214a,** and a second primary elevating conveying belt **214b,** extending towards the palletizing station **208.** In a preferred embodiment, each of the first primary elevating conveying belt **214a,** and the second primary elevating conveying belt **214b** is adapted to receive oriented / stacked layers **202** thereupon from the layer loading conveyor **256.** The primary stacking means **210** further includes a first vertical elevating means **212** adapted to vertically move the spaced apart conveying belts **214** in an upward and / or a downward direction so as to enable receiving the oriented / stacked layers **202** from the layer loading conveyor **256** by vertically aligning each of the belts **214** with the layer loading unit **2561** as and when required. Such a vertical alignment of each of the belts **214** requires a separate vertical movement so as to receive layers **202** on each of the belts separately. In all such embodiments, the belts **214** are then moved to an unloading height in accordance to a height of the grippers which in turn receives the layers **202** from the conveying belts **214** and places them onto the pallet **206.**

The secondary stacking means **220,** adapted to move the layers from each of the spaced apart conveying belts **214,** includes a plurality gripper sets **224** extending away from the palletizing station **208** towards the output end **Eₒ** in a direction opposite to the primary stacking means **210.** The secondary stacking means **220** further includes a drive unit **222** adapted to enable a movement of each of the gripper sets **224** vertically and / or horizontally, such that each of the plurality of gripper sets **224** is adapted to movingly grip the layers **202** positioned onto one of the conveying belts **214,** simultaneously, and drop onto the pallet **206.**

In a preferred embodiment, each of the gripper sets **224** may be a finger based device having a pair of vertically spaced apart fingers set **2241** adapted to hold together the individual layer and / or stack of layers **202** there between. Further, a number of gripper sets **224** is generally equal to a number of spaced apart primary elevating conveying belts **214** such that each of the gripper sets **224** is adapted to movingly grip the layers **202** from one of the primary elevating conveying belts **214,** simultaneously and at the same time.

The driving unit **222** may be any kind of known powering mechanism such as for example, electric motor, hydraulic powering devices, or any other kind of suitable powering device. In some embodiments, each of the gripper sets **224** includes an additional elevator means for elevating the pair of spaced apart finger sets **2241** to a small height ranging between 10 mm to 50 mm. Preferably, each of the finger sets **2241** is of a length more than the maximum length of the layers **202** to be stacked onto the pallet **206.** In another embodiment, the length of each of the finger sets **2241** is more than half of the maximum length of the layers **202** to be stacked onto the pallet **206.**

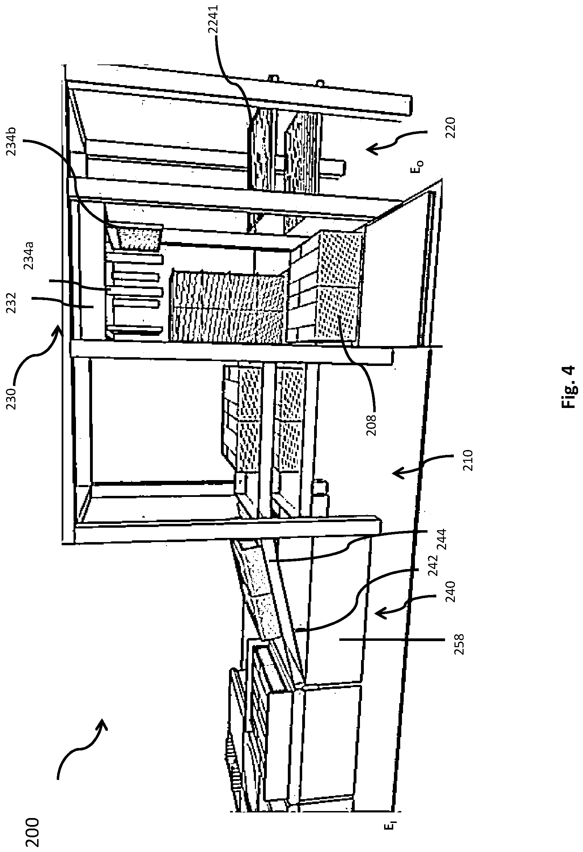

The apparatus **200** further includes a vertically centering frame **230,** as illustrated in Fig. 4, for aligning the layers **202** stacked onto the pallet **206.** The vertically centering frame **230** may include a frame **232** holding one or more sets of centering plates **234,** preferably including a first set of centering plate **234a,** and a second set of centering plate **234b** extending downwardly and positioned on opposite sides of the frame **232.** The vertical centering frame **232** further includes a frame elevating mechanism (not shown) for enabling an upward and / or downward movement thereof. When declined towards the pallet **206,** the set of centering plates **234a, 234b** aligns the pallet **206** from its opposite outsides such that the pallet **206** is aligned centrally. In some embodiments, the centering plates **234** may be in form of one or more fingers, downwardly extending from the frame **232.**

The first vertical elevating means **212** as illustrated in fig, 3 may be any lifting device capable of making upward and downward movement thereby enabling lifting and lowering of each of the primary conveying belts **214.** In a preferred embodiment, the first vertical elevating means **212** may include an elevator assembly having vertically disposed spaced-apart pairs of endless chains trained around sprockets wheels and having tray-supporting spanning bars arranged thereon at various intervals. In some embodiments the endless chains are replaced by lifting rods. In other embodiments, the vertical elevating means **212** may be any lifting mechanism, capable of lifting and / or lowering conveyor means.

The vertical elevating means **212** may further include one or more powering components, such as for example, in some cases a motor, or in other examples may be one or more actuating cylinders for enabling a vertical movement of the elevating means in an upward and / or a downward direction. In some other embodiments, the upward movement of the elevating means is performed using other powered elevating means, such as the hydraulic jack. Accordingly, the vertical elevating means **212** raises and / or lowers the primary conveying belts **214** when the lifting device is activated.

The vertical elevating means **212** is shaped to be incorporated in between the layer loading conveyor **256** and the palletizing station **208.** Further, it is sized to support the primary conveying belts **214** there upon such that a discharging end of each of the primary conveying belts **214** is positioned above the pallet **206** at the palletizing station **208.** Further, the vertical elevating means **212** should be capable of bearing heavy weights so as to comfortably support, the primary conveying belts **214** along with the layers **202** / packages / items to be stacked.

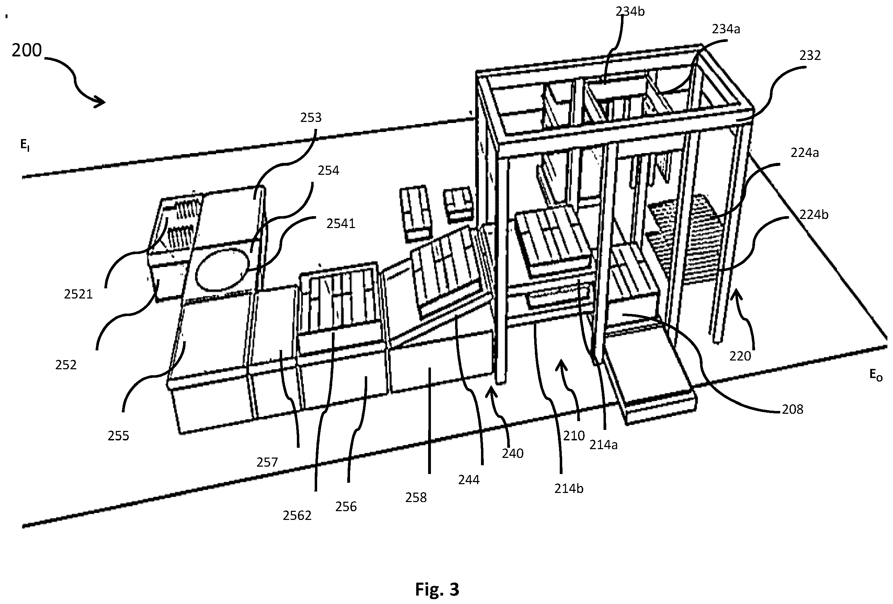

In another embodiment of the present invention as illustrated in Fig. 3 & 4, the palletizing apparatus **200** includes an auxiliary stacking means **240** configured onto the auxiliary centering conveyor **258** for transferring the layers / stack of layers **202** towards the primary stacking means **210.** In such an embodiment, the primary stacking means **210,** the secondary stacking means **220** and the vertical centering frame **230** may have the configurations / specifications / details and variations similar to the embodiment as disclosed in refernce with Fig. 2. The additional auxiliary stacking means **240** in such an embodiment includes a second vertical elevating means **242,** and an inclinable transferring plate **244** extending towards the palletizing station **208.** The second vertical elevating means **242** is generally similar to the first vertical elevating means **212** but includes an additional horizontal angling component **(not shown)** configured thereon so as to enable a selective pivotal connection of the transferring plate **244** with at least one of the two or more vertically spaced apart conveying belts **214** such that a separate layer(s) / stack of layers **202** is transferred to one of the primary conveying belts **214.**

The palletizing apparatus **200** further includes a control unit (not shown) for remotely controlling the operations / handling of various components of the palletizing apparatus **200** such as, the primary stacking means **210,** the secondary stacking means **220,** the vertical centering frame **230** and the auxiliary stacking means **240** including the layers / stack of layers **202** to be stacked onto the pallet **206.** In some embodiments, the control unit includes a data capturing unit for tracking the parameters such as for example, location of the layers **202** to be stacked, a loading height of the pallet **206** palletizing station **208,** or the like. The control unit may further include a processor unit for processing the data captured by the data capture unit on the basis of predetermined logics / rules for facilitating the operation within the system. The control unit may further include an instruction unit that delivers the instructions to various components such as various motors, driving units, conveyer means, vertical elevating means and centering frame, or the like, to facilitate a desired and smooth operation. The control unit is generally connected to the various components of the apparatus **200** through connection mechanisms such as electric cables, data link cables, or the like.

In some embodiments, the control unit may be provided as a computer program product, such as may include a computer-readable storage medium or a non-transitory machine-readable medium maintaining instructions interpretable by a computer or other electronic device, such as to perform one or more processes. A non- transitory machine-readable medium includes any mechanism for storing information in a form (including a processing application or software) readable or interpretable by a machine (such as a computer). The non-transitory machine-readable medium may take the form of, but is not limited to, any known storage technique, including magnetic storage media, optical storage media, magnetooptical storage media; read only memory (ROM); random access memory (RAM); erasable programmable memory (including EPROM and EEPROM); flash memory; and otherwise.

In an embodiment of the present invention, the control unit may include an automatic mode / preprogrammed unit for automatizing the operation of the palletizing apparatus **200** in accordance with the desired stacking pattern to be achieved for palletizing the layers onto the base pallet.

In preferred embodiments, each of the plurality of individual conveyors **250** may be any known kind of conveyor means such as for example roller conveyor having a receiving portion (not shown) separated from a discharge portion (not shown) through a conveying belt. In other embodiments of the present invention, each of the conveyors **250** may be any kind of suitable conveyor means for use along with the palletizing apparatus **200.**

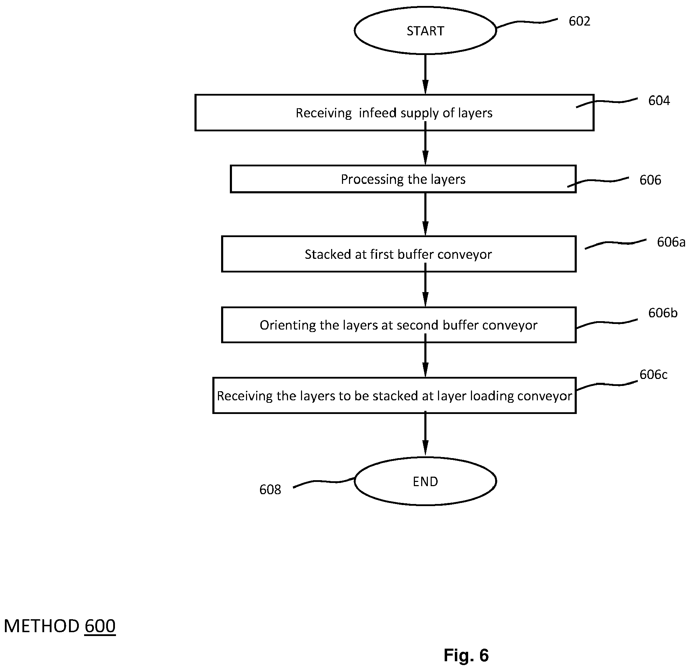

Fig. 6 with reference to Figs.1 to 5, is a flow diagram illustrating a method **600** for processing an infeed supply of layers **202** received at the receiving station **204,** and forward towards the primary stacking means **210** to stack the processed and / oriented layers and / or stack of layers **202** onto the base pallet **206** at the palletizing station **208** using the apparatus **200** of the present invention. The method **600** starts at step **602** and moves to step **604** where a plurality of layers **202** is received at the receiving station **210.** Thereafter, the infeed layers **202** is processed at step **606** by stacking and moving the layers from receiving station **204** through the plurality of individual conveyors **250,** including the pre-stacker **2521** of first buffering conveyor **252,** the turning unit **2541** of the second buffer conveyor **254** towards the layer loading conveyor **256.** The processing of the layers **202** includes pre-stacking and / or accumulation if required while moving through the turning unit **2541** and / or alignment at the layer loading conveyor **256.** This movement / accumulation / orientation / alignment / handling of the layers **202** is controlled by the control unit in accordance to the desired orientation and / or the stacking pattern to be obtained.

For example, the infeed supply of layers **202** is received and stacked at the first buffer conveyor **252 at 606a** and received at the second buffer conveyor **254** through the first side conveyor **253.** Thereafter, at step **606b,** each of the layers/ stack of layers **202** received at the turning unit **2541** may be turned together and forwarded towards the layering loading conveyor **256** through the second side transfer **255** at step 606c.

Preferably, all the steps of method **600** maybe executed using the control unit from a remote place. In another embodiment, the control unit may be configured to work automatically without any intervention from an operator or a user. Accordingly, the apparatus **200** processes an infeed of layers **202** and delivers to the layer loading conveyor **256** from where it is stacked using a method 700 as disclosed below.

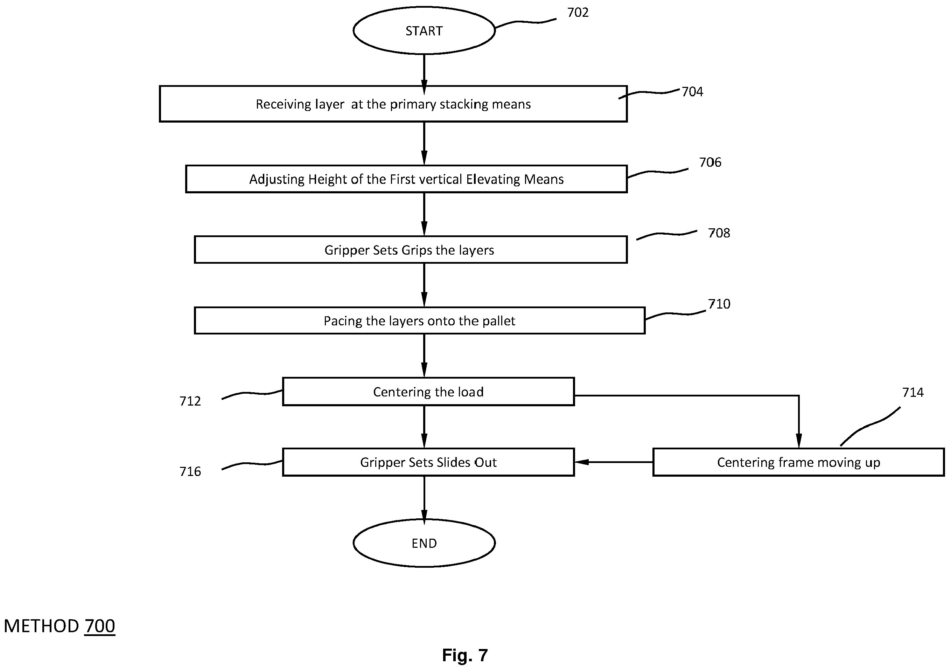

Fig. 7 with reference to Figs.1 through 5, is a flow diagram illustrating a method **700** for stacking and aligning layers **202** received from the receiving station **204,** onto the pallet **206** at the palletizing station **208** using the apparatus **200** of the present invention. The method **700** starts at step **702** and moves to step **704** where a separate layer / stack of layers **202** is received onto each of the conveying belts **214** of the primary stacking means **210.** In an embodiment as illustrated in Fig. 2, such a transfer is achieved by lowering each of the conveying belts **214** at a level vertically aligned with the layer loading conveyor **256** such that the layer loading unit **2561** transfers the layers **202** onto the corresponding conveying belt **214,** sequentially one by one. However, in another embodiment, the apparatus **200** utilizes the auxiliary stacking means **240** for transferring a separate layer / stack of layers **202** onto each of the conveying belts **214** by pivotally connecting the transferring plate **244** to each of the conveying belts **214,** sequentially one by one.

The method then proceeds to step **706** where a height of the first vertical elevating means **212,** and the drive unit is adjusted a vertical height of each of the gripper sets **224** corresponds to a height of one of the elevating conveying belts **214** which in turn are positioned to a stackable height at the palletizing station **208** for example, just above the last layer **202** already stacked onto the pallet **206.**

Further, the method includes a step **708,** where each of the gripper sets **224** grips, holds and move the corresponding layers **202** and drops it onto the stack at the pallet **206** at the palletizing station **208,** simultaneously and at a same time at step 710.

Once placed, the method **700** proceeds to step **712** where the vertical centering frame **230** moves down towards and above the pallet **206** so as to align the pallet **206** vertically from outside thereof through the centering plates **234a** and **234b.** Once aligned, the gripper sets **224** slides in a direction away from the primary stacking means **210** at step **714.** Further, the centering frame **230** retracts back in an upward direction to keep the pallet **206** aligned at step **716.** In an embodiment of the present invention, the steps of the method **700** may be performed sequentially one after the other in any desired order. Particularly, the steps **714,** and **716** may either be performed simultaneously, or sequentially in any desired order.

Preferably, all the steps of method 600 and 700 maybe executed using the control unit from a remote place. In another embodiment, the control unit may be configured to work automatically without any intervention from an operator or a user.

Such a stacking of the layers **202** using the primary stacking means **210,** the secondary stacking means **220** as well as the auxiliary stacking means **240** have the advantage that in such an embodiment, the layers **202** from multiple conveying belts **214** may be stacked simultaneously and at the same time thereby reasonably increasing the efficiency of the palletizing apparatus **200.** Such a palletizing apparatus **200** while being faster than the previously available mechanisms keeps the stack properly aligned thereby avoiding a possibility of any damage to the stacks during shipment and / or transportation and / or dispensing.

### INDUSTRIAL APPLICABILITY

The present disclosure relates to a palletizing apparatus **200** for stacking plurality of layers of variable sizes including very large and very small size bundles of the range at a very fast pace due to the possible stacking of multiple layers, simultaneously and at the same time. The apparatus may be used preferably in the corrugated box manufacturing industries for palletization but the palletizing apparatus **200** may be used for improvising the stacking in various industries including but not limited to industries related to such as food items, tiles, compact disks (CDS) or other relatively flat products.

The palletizing apparatus **200** of the current invention is far more efficient than the previously available palletization mechanisms. Further, while the alignment in previously known mechanism obviates the creation of voids / gaps at the bottom portion - the current palletizing apparatus, while aligning the layers from above at the outsides of the pallets. assures a proper alignment even at the bottom level of the pallet aligned and thereby avoiding the formation of any voids / gaps.

Further, the palletizing apparatus of the current invention is very simple to execute and may be incorporated into existing manufacturing / production plants etc, thereby avoiding any addition of huge costs. The palletizing apparatus may accordingly be adapted the apparatus in part or as a whole in currently manufacturing plants.

Moreover, the palletizing apparatus **200** includes multiple buffer conveyors adapted to temporarily accumulate the layers and / or articles 290 such as beverage containers generally containing liquids, such as beer, wine, cider, hard liquor (e.g., distilled beverage, spirit, liquor, hard alcohol, etc.), soft drinks (e.g., cola, soda, pop, tonic, seltzer), iced tea, soda water and other types of carbonated / non-carbonated beverages. Such a buffering capability is adapted to compensate for any difference in the rate at which infeed is received and the rate at which layers are stacked, and therefore avoid the need to stop and / or interrupt the process at the infeed end.

While, the disclosure majorly mentions stacking in relation to the base pallet **206,** it is contemplated for a person skilled within the art that any kind of stacking on any predetermined / new stacking surface may be achieved using the apparatus **200** of the current disclosure.

Referring to Figs. 6-7, methodology in accordance with a preferred embodiment of the claimed subject matter is illustrated.

## Claims

1. A multi-layer palletizing apparatus, for stacking layers received at a receiving station on to a stack at a palletization station, the apparatus comprising:
a primary stacking means comprising two or more vertically spaced apart primary elevating conveying belts, each adapted to receive one of a plurality of layers thereon and extended towards the palletization station; the primary conveying belts comprising a first vertical elevating means adapted to vertically move the belts in an upward and / or downward direction;
a secondary stacking means comprising a plurality of grippers set adapted to move vertically and / or horizontally via a drive unit allowing each gripper set to movingly grip layers from one of the two or more spaced apart primary elevating conveying belts;
wherein, when the layers to be stacked are received on the conveying belts of the primary stacking means, the first vertical elevating means elevates to a height corresponding to a loading height at the palletization station such that each of the gripper sets move vertically and / or horizontally to at least partially hold and move the layer from one of the primary stacking belts towards the palletizing station to place it onto the stack.

2. The apparatus of claim 1 wherein the primary stacking means further comprising an inclinable transfer plate adapted to be inclined using a second vertical elevating unit, so as to be pivotally and selectively connected to one of the two or more vertically spaced apart conveying belts such that a separate layer received from the receiving station may be transferred to one of the primary conveying belts.

3. The apparatus of claim 1 further comprising a vertically movable centering frame positioned above the palletizing station adapted to centrally align the layers placed on to the stack at the palletizing station.

4. The apparatus of claim 2, wherein the centering frame comprising one or more set of centering plates, each set comprising two plates positioned onto opposite sides and extending downwardly towards the palletizing station.

5. The apparatus of claim 1, further comprising a plurality of individual conveyors including a first buffer conveyor positioned at the receiving station, the first buffer conveyor having a bundle pre-stacker adapted to buffer infeed layers in a stack of layers.

6. The apparatus of claim 5, wherein the bundle pre-stacker comprising a pair of sideways centering stackers adapted to center the infeed layers from sides such that the stacked layers are aligned thereat.

7. The apparatus of claim 5, wherein the plurality of individual conveyors comprising a first side transfer adapted to receive the layers from the first buffer conveyor and divert along a direction of conveyors towards the palletizing station.

8. The apparatus of claim 6 and 7, where in the pre-stacker is adapted to forward the lower most layer of the stacked layers, towards the first side transfer, individually one by one.

9. The apparatus of claim 5 and 7, where in the pre-stacker is adapted to forward the stack of a predetermined number of layers, towards the first side transfer, together one over the other.

10. The apparatus of claim 7, wherein the first side transfer is further connected to a second side transfer through a second buffer conveyor along the direction of conveyors towards the palletizing station.

11. The apparatus of claim 10, wherein the second buffer conveyor comprising a turning unit adapted to change an orientation of one or more layers received thereon in accordance to a desired orientation at which the layers are to be palletized.

12. The apparatus of claim 10, wherein the second side transfer is connected to the primary stacking means through a layer loading conveyor wherein the layer loading conveyor comprising a loading unit and a pair of side aligning devices adapted to align the layers in accordance to the desired orientation at which the layers are to be palletized.

13. The apparatus of claim 12, further comprising a third buffer conveyor positioned between the second side transfer and the layer loading conveyor.

14. The apparatus of claim 1, wherein each of the plurality gripper set comprising a pair of vertically spaced apart fingers adapted to hold together the individual layer and / or stack of layers there between.

15. The apparatus of claim 1, wherein a number of gripper set is equal to a number of spaced apart primary elevating conveying belts such that each of the gripper set is adapted to movingly grip the layers from one of the primary elevating conveying belts, simultaneously and at the same time.
